(19) **Europäisches Patentamt**
**European Patent Office**
**Office européen des brevets**

(11) **EP 2 617 642 B1**

(12) # FASCICULE DE BREVET EUROPEEN

| | |
|---|---|
| (45) Date de publication et mention de la délivrance du brevet:<br>**07.01.2015  Bulletin 2015/02** | (51) Int Cl.:<br>***B63B 39/10*** (2006.01)    ***E02B 3/06*** (2006.01)<br>***B63B 1/32*** (2006.01)    ***B63B 1/38*** (2006.01)<br>***B63B 1/40*** (2006.01) |

(21) Numéro de dépôt: **13151194.1**

(22) Date de dépôt: **14.01.2013**

(54) **Dispositif destiné à atténuer à la naissance le batillage d'une structure flottante du type bateau ou convoi fluvial, grâce à un système de brise-lames pneumatique embarqué à bord**

Vorrichtung zum Abschwächen der entstehenden Sogwirkung einer schwimmenden Struktur wie Schiff oder Schleppverband von Flussschiffen dank eines an Bord eingebauten pneumatischen Wellenbrechersystems

Device for damping at source the wave action of a floating structure such as a boat or river train by an on-board pneumatic breakwater system

| | |
|---|---|
| (84) Etats contractants désignés:<br>**AL AT BE BG CH CY CZ DE DK EE ES FI FR GB GR HR HU IE IS IT LI LT LU LV MC MK MT NL NO PL PT RO RS SE SI SK SM TR** | • **Chobert, Philippe**<br>**30650 Rochefort-du-Gard (FR)**<br>• **De Vleeschouwer, Marc**<br>**3080 Tervuren (BE)** |
| (30) Priorité: **17.01.2012  FR 1200150** | (74) Mandataire: **Coulon, Ludivine et al**<br>**Gevers & Vander Haeghen**<br>**Holidaystraat 5**<br>**1831 Diegem (BE)** |
| (43) Date de publication de la demande:<br>**24.07.2013  Bulletin 2013/30** | |
| (73) Titulaire: **Managetic SPRL**<br>**1410 Waterloo (BE)** | (56) Documents cités:<br>**DE-A1- 3 924 204    FR-A1- 2 641 751**<br>**FR-A1- 2 910 433    GB-A- 278 601**<br>**GB-A- 1 538 421** |
| (72) Inventeurs:<br>• **Beynet, Jean-Marc**<br>**30320 Marguerittes (FR)** | |

**Description**

La présente invention concerne la navigation sur les eaux intérieures (fleuves, estuaires, rivières naturelles, rivières canalisées, canaux, chenaux, lacs, etc.).

Les berges de ces voies d'eau sont souvent dégradées par le batillage généré par la navigation de commerce et de plaisance. Pour y remédier, les berges doivent être protégées par des linéaires importants, parfois disgracieux et souvent coûteux de dispositifs divers (enrochements, perrés, fascinage, palplanches, épis transversaux, etc.).

Le dispositif présenté ici a pour ambition d'atténuer le batillage à la source, grâce à un brise-lames pneumatique embarqué sur le navire qui génère le batillage. Avec cette invention, l'amplitude des vagues du batillage est fortement diminuée, réduisant ainsi considérablement les impacts sur les berges.

On connaît de la demande de brevet WO/2008/074886 un dispositif atténuateur de houle destiné à être embarqué à bord d'une structure flottante, afin de faciliter le transbordement entre la structure et un bateau de transfert et structure flottante le comportant. Mais un tel dispositif est prévu pour fonctionner lorsque le bateau est stationnaire, pour calmer les clapots du type mer du vent. Ce dispositif ne concerne donc pas les vagues d'étrave générées par le bateau en marche et n'est pas en rapport avec la protection des berges des voies d'eau.

On connait également différents systèmes d'injection de bulles d'air, qui sont destinés à réduire les bruits rayonnés par les hélices ou encore à amortir le son sous l'eau (EP0654780) ou encore le système « Prairie-Masker » par exemple qui utilise une « couverture de bulles » pour masquer les bruits sur les navires militaires. Ces différents systèmes n'ont pas pour vocation de réduire l'impact des vagues d'étrave des navires sur les berges des voies d'eau.

On connait aussi les possibilités d'injection de bulles sous la carène d'un navire pour réduire l'effet de frottement et de résistance de la coque lors de sa progression dans l'eau. Ces dispositifs ont été inventés pour diminuer la résistance de pénétration dans l'eau et réduire la consommation de fuel de navires maritimes. Ils n'ont pas pour vocation de réduire l'impact des vagues d'étrave sur les berges des voies d'eau. Au contraire, à consommation égale, ils permettent souvent d'augmenter la vitesse du navire et donc d'aggraver l'impact des vagues d'étrave.

On connait également la demande de brevet WO/2010/087717 qui optimise la forme de coque à l'avant d'un bateau pour diminuer la résistance de pénétration dans l'eau et réduire ainsi la consommation de fuel. Mais cette optimisation de la forme de la coque n'est pas adaptée aux barges et convois fluviaux. La principale fonction du bulbe d'étrave est de créer une vague à l'avant du système normal de vagues généré par le navire en route. A une certaine vitesse, le creux de cette vague additionnelle coïncide avec le sommet de la vague d'étrave qui se retrouve annulée. La résistance hydrodynamique est ainsi réduite et le navire peut aller plus vite pour une même puissance. Cependant, ce système ne fonctionne que pour une vitesse et une immersion donnée. Il est surtout appliqué aux navires maritimes et difficilement transposable aux barges et convois fluviaux.

On connait de la demande WO/9307046 un navire à effet de surface par aspiration naturelle mû par trois coques formant des tunnels entre elles et par lesquels l'air est aspiré par le mouvement d'avance de l'embarcation afin de produire un effet de levage et soulever les coques en les dégageant pratiquement de l'eau, minimisant ainsi la force de trainée et donc la vague d'étrave. Mais un tel dispositif n'est pas adapté aux convois fluviaux en charge.

Le document DE3924204 décrit un dispositif dont la fonction principale est de diminuer le frottement de la coque dans l'eau afin de réduire les consommations en carburant. Il s'agit plus particulièrement d'un dispositif symétrique réglable et immergé en permanence.

Le document GB278601 divulgue un dispositif relevable pour protéger un navire contre des vagues incidentes venant du large et provoquant le roulis et le tangage du navire.

Le document FR2641751 décrit un hydroptère à coussin d'air dont les dispositions constructives consistent à confiner de l'air dans une jupe sous une coque pour la déjauger.

La présente invention est complètement différente de la technique antérieure, dans sa conception et dans son application, car elle consiste à atténuer à la naissance les vagues d'étrave générées par un bateau en marche, en mettant en oeuvre un ou plusieurs brise-lames pneumatiques, dans le but de protéger les berges des voies d'eau.

Dans une voie d'eau confinée par ses berges, les champs des vagues d'accompagnement asymptotiques d'un navire sont dissociés en deux systèmes, le premier est généré par la proue (avant) et le second est généré par la poupe (arrière).

Chaque système se décompose en deux champs de vagues. Le premier système est transversal : ses crêtes sont normales à l'axe de déplacement du navire ; tandis que le second est divergent : ses crêtes sont tangentes à l'axe de déplacement du navire.

Ces deux champs s'incurvent de part et d'autre de l'axe du navire pour se rejoindre, les crêtes sont alors parallèles entre elles mais déphasées, le long du dièdre de Kelvin qui suit le navire à $\pm$19°28' de part et d'autre de son axe. L'amplitude de chaque champ de vagues décroît proportionnellement à la racine carrée de la distance parcourue. Cependant, le long du dièdre, l'ensemble des vagues ne décroît plus que comme la racine cubique de la distance parcourue. C'est donc elle qui se propage le plus loin et qui est essentiellement responsable des désagréments causés par le batillage.

La hauteur de l'onde de batillage est directement liée à la taille du navire, à son déplacement et à sa vitesse.

La période $T$ et la longueur d'onde $\lambda$ maximale du batillage sont essentiellement liées à la vitesse $U$ des navires ($g$=9.81 m/s$^2$ étant l'accélération de la pesanteur terrestre) :

$$\lambda = \frac{2\pi}{g}U^2 \qquad\qquad T = \frac{2\pi}{g}U$$

Dans le cas d'un convoi fluvial circulant à 5 noeuds (9,25 km/h, soit 2,56 m/s), la longueur d'onde maximale des ondes de batillage correspondant à cette vitesse est de 4,20 m. Cette longueur d'onde correspond à une période de 1,63 s.

A une vitesse de 8 noeuds (14,80 km/h, soit 4,11 m/s), la longueur d'onde serait de 10,80 m et la période de 2,63 s.

A 5 noeuds, la hauteur (crête à creux) des vagues d'accompagnement peut être estimée dans les fourchettes suivantes :

- 0,10 à 0,20 m pour les petites unités de plaisance (<15 m),
- 0,20 à 0,40 m pour les bateaux de pêche, les vedettes à passagers, les navires de servitude et les navires de moyenne plaisance (20 à 30 m),
- 0,30 à 0,50 m pour les convois fluviaux de commerce ou grands bateaux à passagers, bateaux-hôtels.

Si les berges ne sont pas protégées contre le batillage, les vagues de batillage provoquent des érosions et dégradent les voies d'eau.

Pour remédier à ce problème, sans mettre en oeuvre pour autant des protections sur les berges, une solution originale est présentée ci-après. Elle consiste à atténuer les vagues de batillage à la source grâce à un rideau de bulles produit par un système embarqué à bord du convoi fluvial lui-même.

D'autres avantages et caractéristiques de l'invention apparaîtront à la lecture de la description d'une forme préférée de réalisation donnée à titre d'exemple non limitatif en se référant aux dessins annexés.

La figure 1 illustre un convoi fluvial progressant sur une voie d'eau.
La figure 2 est une vue longitudinale du convoi illustré à la figure 1.
Les figures 3 et 4 illustrent un dispositif de déploiement et d'immersion d'un brise-lames.
Les figures 5 et 6 illustrent le réglage d'un brise-lames.

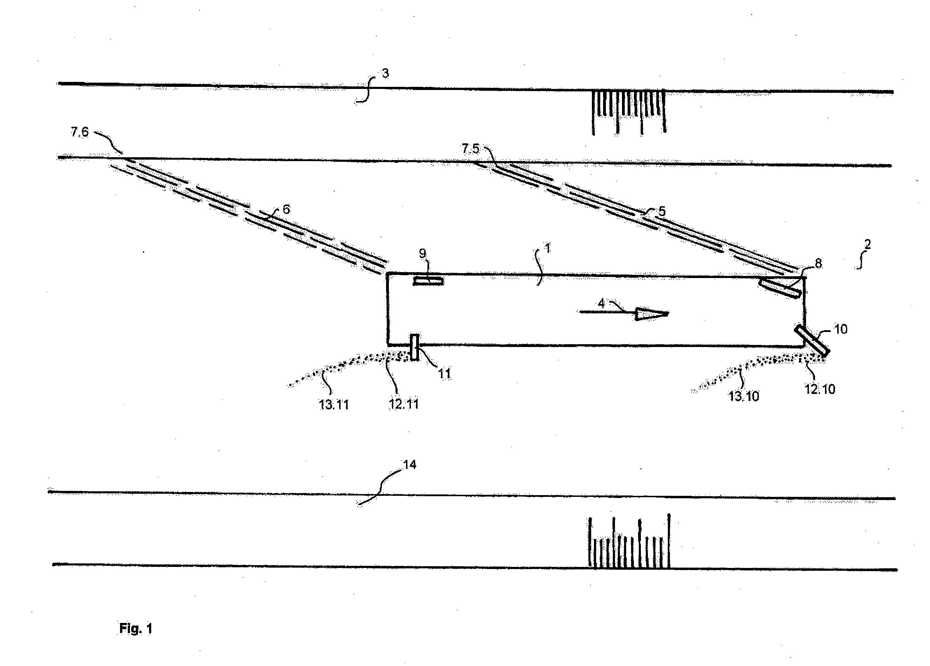

La figure 1 représente schématiquement un convoi fluvial (1) du type barge, péniche, pousseur,... progressant sur une voie d'eau (2), cette voie d'eau étant limitée par au moins une berge (3). Le convoi fluvial avance dans le sens de la flèche (4) et génère plusieurs vagues d'étraves, en particulier une vague avant gauche (5) et une vague arrière gauche (6). Les impacts sur la berge (3) de ces deux vagues d'étrave se produisent aux points (7.5) et (7.6). Sur cette même figure 1, quatre brise-lames pneumatiques sont représentés schématiquement. Le brise-lames pneumatique avant gauche (8) est dessiné en position repliée, tout comme le brise-lames pneumatique arrière gauche (9). A l'inverse, le brise-lames pneumatique avant droit (10) est représenté en action, déployé et immergé, tout comme le brise-lames pneumatique arrière droit (11). Ces deux derniers brise-lames (10 et 11) sont en action et génèrent chacun un rideau de fines bulles (12.10 et 12.11) en avant des vagues d'étrave créées par le déplacement du convoi fluvial (1) à la vitesse (4). De ce fait, les vagues d'étrave (13.10 et 13.11) sont interceptées par les rideaux de bulles respectifs (12.10 et 12.11) et grandement atténuées car les bulles créent un courant contre les vagues les faisant ainsi déferler avant leur impact sur la berge (14).

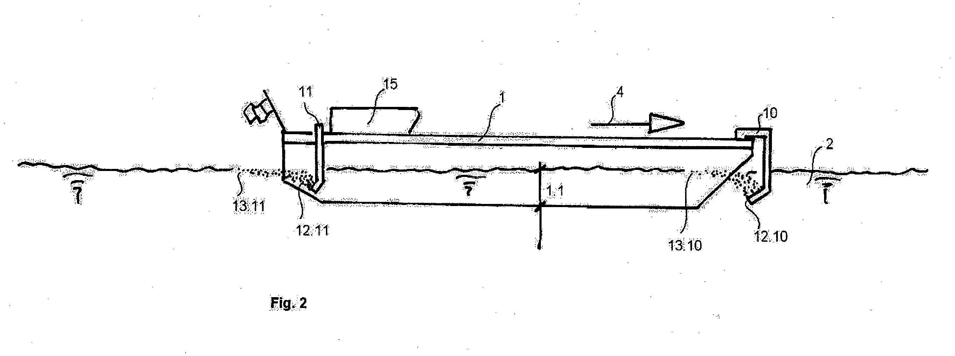

La figure 2 représente une vue longitudinale de ce même convoi en montrant les brise-lames en action du côté droit. Sur cette élévation longitudinale, on retrouve le convoi fluvial (1), la voie d'eau (2), le sens et la vitesse d'avancement (4) du convoi fluvial (1), le brise-lames pneumatique à l'avant droit (10) ainsi que le brise-lames pneumatique à l'arrière droit (11), les rideaux de bulles (12.10) à l'avant droite et (12.11) à l'arrière droite, ainsi que les vagues d'étraves atténuées (13.10) à l'avant et (13.11) à l'arrière, après leur interception par les rideaux de bulles. L'enfoncement (1.1), appelé aussi parfois tirant d'eau, est représenté également sur cette figure 2. Cette coupe montre également le poste de pilotage (15) dans lequel les commandes peuvent être regroupées. En revanche, pour ne pas surcharger cette figure 2, l'hélice et le gouvernail n'ont pas été représentés sur cette vue longitudinale.

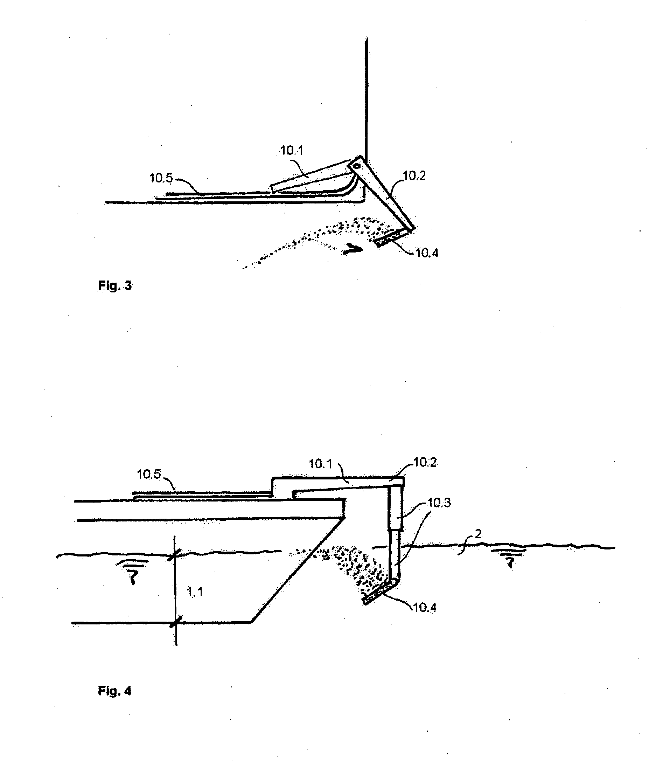

Les figures 3 et 4 montrent un exemple de dispositif pour déployer puis immerger un brise-lames en avant d'une des vagues d'étrave du convoi fluvial. Cet exemple de dispositif est décrit plus en détail comme étant une des meilleures manières de réaliser l'invention, en mettant en oeuvre une potence rotative en positon repliée (10.1), puis en position déployée (10.2), qui se prolonge par des bras (10.3) qui se déploient eux-mêmes et permettent d'immerger le brise-lames pneumatique (10.4) producteur de bulles, sous la surface de la voie d'eau (2). Le brise-lames pneumatique est alimenté en gaz comprimé par une conduite (10.5) reliée à une source de production de gaz sous-pression, comme un compresseur par exemple, lui-même embarqué sur la structure flottante (1). Pour ne pas surcharger ces figures 3 et 4, les vérins et autres dispositifs de déploiement n'ont pas été représentés.

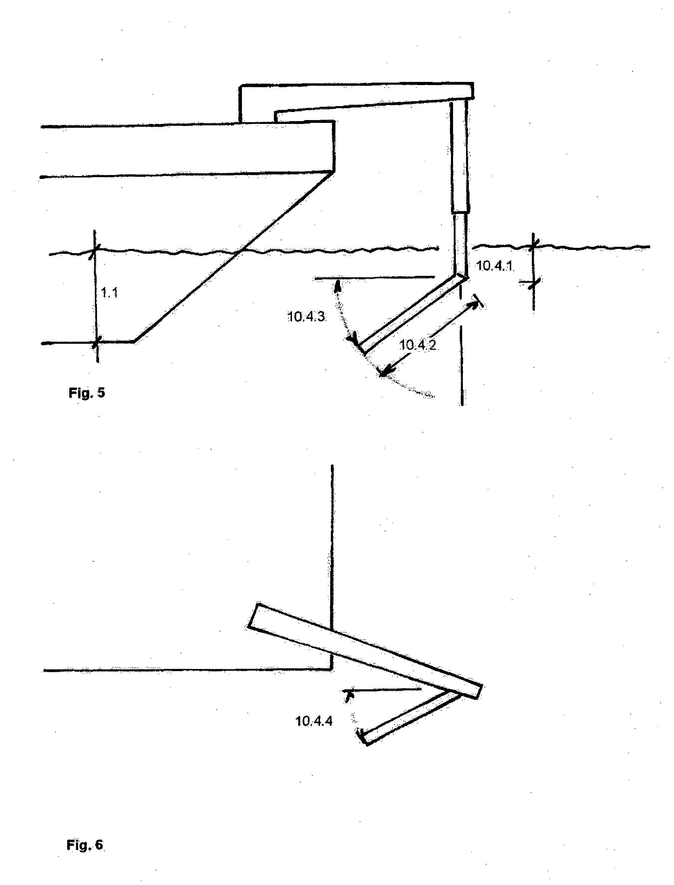

Les figures 5 et 6 montrent les détails du réglage d'un brise-lames pour optimiser son fonctionnement, en particulier la profondeur d'immersion (10.4.1), la longueur (10.4.2), l'angle par rapport à l'horizontale (10.4.3), l'angle par rapport à l'axe longitudinal (10.4.4), cet axe étant celui du convoi (1). Ces différents réglages ainsi que le débit et la pression du gaz dépendent directement des caractéristiques géométriques de chaque famille de convoi (longueur, largeur, forme de l'étrave, enfoncement) et de la vitesse d'avancement. Pour ne pas surcharger ces figures 5 et 6, les vérins et autres dispositifs de déploiement n'ont pas été représentés.

La description détaillée qui suit, en référence aux figures 1 à 4 est donnée pour un exemple de réalisation d'un dispositif atténuateur à la naissance du batillage d'une structure flottante du type bateau ou convoi fluvial, grâce à un système de brise-lames pneumatique embarqué à bord.

Si ce convoi progresse à 5 noeuds, il produit des vagues d'étrave dont la période est de 1,63 s. Si en fonction du déplacement du navire, la vague d'étrave a une amplitude de 0,50 m par exemple, il est possible de diminuer cette amplitude et de la ramener par exemple à 0,20 m en produisant un rideau de bulles en avant de la vague d'étrave. Ces rideaux de bulles sont représentés schématiquement sur l'ensemble des figures 1 à 6.

Passer d'une vague de 50 cm d'amplitude à 20 cm d'amplitude correspond à un coefficient de transmission Ct = 0,20/0,50 = 0,40

Pour y parvenir, le rideau de bulles devra être produit par un compresseur dont le débit dépend de la finesse des trous du tube bulleur et également de la profondeur d'immersion du brise-lames.

A titre indicatif, pour un brise-lames de 1 m de longueur immergé de 3 m, le débit d'air d'alimentation devra être de l'ordre de 10 l/s. Mais il faut tenir compte du fait que le déplacement de la barge est de 1,63 m pendant 1 s. Il faut donc multiplier le débit d'air par cette valeur. Dans ces conditions, chaque brise-lames doit être alimenté en air comprimé à un débit de 16,3 l/s, sous 2 à 3 b environ, nécessitant de disposer à bord d'un compresseur pouvant alimenter les 4 brise-lames simultanément, soit un débit total de 65,2 l/s (3900 l/mn).

Si en fonction de la forme de la carène, de l'enfoncement du convoi et de la vitesse d'avancement, les essais en vraie grandeur montrent que 2 brise-lames sont suffisants, (à l'avant ou au contraire à l'arrière), le compresseur pourrait être de moindre capacité, de l'ordre de 2000 l/mn.

Les tubes brise-lames sont implantés sur la coque aux 4 coins de façon à pouvoir produire les bulles juste en avant de la naissance de chaque vague de batillage. Ces tubes-bulleurs sont immergés uniquement pendant la navigation et sont rétractés à l'intérieur de la coque ou au-dessus lorsque la vitesse est diminuée à l'approche des ports et quais d'accostage.

Le pilote de la barge a la possibilité de contrôler le déploiement et le réglage des 4 brise-lames depuis son poste de pilotage et de façon distincte les uns des autres. Il en va de même pour l'alimentation en air comprimé, elle peut être mise en opération depuis le poste de pilotage, de façon indépendante pour chaque brise-lames. Ce regroupement des commandes au poste de pilotage fait partie également de l'invention.

Pour chaque famille de convoi, ces réglages sont optimisés lors d'essais en vraie grandeur, puis consignés dans un mode d'emploi conservé dans le poste de pilotage du convoi fluvial pour que le Pilote puisse mettre en oeuvre les brise-lames de la manière la plus efficace possible en fonction de l'enfoncement et de la vitesse du convoi.

Dans un mode préféré de l'invention, ces données de réglage sont stockées dans un ordinateur embarqué dans le poste de pilotage et le fonctionnement des brise-lames pneumatique est couplé :

- Au loch qui mesure en temps réel la vitesse du convoi et indique au Pilote le réglage optimum du positionnement des brise-lames ainsi que le débit d'air à envoyer pour ne pas dégrader les berges,
- Au GPS du bord dans lequel on a introduit en mémoire la position des tronçons des voies d'eau avec des berges à risque, soit parce qu'elles sont non protégées et sensibles à l'érosion, soit parce qu'elles sont sensibles sur le plan écologique (zone de frayère par exemple). Lorsque le convoi fluvial approche de ces zones sensibles, le GPS et l'ordinateur couplé recommandent au Pilote de ralentir et lui indiquent les réglages les meilleurs pour chacun des 4 brise-lames, afin d'atténuer les vagues d'accompagnement du convoi, en fonction de la vitesse, de l'enfoncement et de la sensibilité des berges de part et d'autres du convoi.

Il est bien entendu que la présente invention n'est en aucune façon limitée aux formes de réalisations décrites ci-dessus et que bien des modifications peuvent y être apportées sans sortir du cadre des revendications annexées.

**EP 2 617 642 B1**

**Revendications**

1. Dispositif embarqué à bord d'une structure flottante (1) et destiné à atténuer à la naissance le batillage, comportant au moins deux brise-lames pneumatiques, deux à l'avant (8 et 10) ou deux à l'arrière (9 et 11) ou quatre au total entre l'avant et l'arrière (8, 9, 10 et 11), ces brise-lames étant constitués par une conduite perforée (10.4), alimentée en gaz par une source de gaz sous pression, destinée à produire, lorsqu'elle est immergée, un rideau de fines bulles (12) de gaz, qui atténuent les vagues de batillage lorsque la structure flottante d'enfoncement (1.1) se déplace à une vitesse (4) entre les berges (3) et (14) d'une voie d'eau (2), **caractérisé en ce qu'il** comprend une structure porteuse recevant le brise-lames pneumatique (10) et un mécanisme (10.1 ; 10.2 ; 10.3) apte à déplacer le brise-lames pneumatique (10) entre une position repliée et une position déployée selon laquelle ledit brise-lames pneumatique (10) est situé dans l'eau à distance de la surface, en avant des vagues de batillage générées par le déplacement de la structure flottante (1), le déploiement étant commandé depuis le poste de pilotage (15), indépendamment pour chacun des brise-lames (8, 9, 10 et 11).

2. Dispositif selon la revendication 1, **caractérisé en ce que** la conduite perforée (10.4), constitutive du brise-lames, comporte une canalisation (10.5) d'alimentation en gaz comprimé prévue pour être connectée à la source de gaz comprimé embarquée.

3. Dispositif selon l'une quelconque des revendications 1 et 2, **caractérisé en ce qu'**au moins en position déployée, la conduite perforée constitutive du brise-lames pneumatique (10.4) est mise en position de fonctionnement par des tronçons (10.2 ; 10.3) de bras articulés les uns aux autres.

4. Dispositif selon l'une quelconque des revendications 1 à 3, **caractérisé en ce que** le réglage optimum du brise-lames (10.4) est possible aussi bien pour sa profondeur d'immersion (10.4.1), sa longueur (10.4.2), son angle par rapport à l'horizontale (10.4.3), son angle (10.4.4) par rapport à l'axe longitudinal du convoi, le débit et la pression du gaz.

5. Dispositif selon l'une quelconque des revendications 1 à 4, **caractérisé en ce que** les réglages optimaux peuvent être commandés par un opérateur depuis le poste de pilotage (15).

6. Dispositif selon l'une quelconque des revendications 1 à 5, **caractérisé en ce que** les réglages optimaux sont commandés par un ordinateur de bord couplé à un GPS qui mesure en permanence la position du convoi fluvial sur la voie d'eau, sa vitesse et son cap et qui indique les réglages optimaux en fonction de l'enfoncement, de la vitesse et de la sensibilité des berges.

7. Dispositif selon l'une quelconque des revendications 1 à 6, **caractérisé en ce que** le gaz sous-pression est de l'air comprimé.

**Patentansprüche**

1. Vorrichtung, verladen an Bord einer schwimmenden Einrichtung (1) und dazu vorgesehen, die Entstehung der Heckwelle abzuschwächen, mindestens zwei pneumatische Wellenbrecher, zwei an der Vorderseite (8 und 10) oder zwei an der Hinterseite (9 und 11) oder insgesamt vier zwischen der Vorderseite und der Rückseite (8, 9, 10 und 11) umfassend, wobei diese Wellenbrecher aus einem perforierten Rohr (10.4) bestehen, das mit Gas von einer Druckgas-Quelle aus versorgt wird, das dazu vorgesehen ist, wenn es unter Wasser ist, einen Vorhang aus feinen Gas-Blasen (12) herzustellen, welche die Wellen der Heckwelle abschwächen, wenn sich die schwimmende Einrichtung im Tiefgang (1.1) mit einer Geschwindigkeit (4) zwischen den Kanalufern (3) und (14) eines Wasserweges (2) bewegt, **dadurch gekennzeichnet, dass** sie eine Trageeinrichtung umfasst, welche den pneumatischen Wellenbrecher (10) und einen Mechanismus (10.1; 10.2; 10.3) aufnimmt, der dazu in der Lage ist, den pneumatischen Wellenbrecher (10) zwischen einer eingezogenen Position und einer ausgefahrenen Position zu bewegen, in welcher der pneumatische Wellenbrecher (10) sich im Wasser in einer Entfernung zur Oberfläche und vor den Wellen der Heckwelle befindet, die durch die Bewegung der schwimmenden Einrichtung (1) erzeugt werden, wobei das Ausfahren für jeden der Wellenbrecher (8, 9, 10 und 11) unabhängig von dem Steuerposten (15) aus gesteuert wird.

2. Vorrichtung nach Anspruch 1, **dadurch gekennzeichnet, dass** das perforierte Rohr (10.4), aus dem der Wellenbrecher besteht, eine Versorgungsrohrleitung (10.5) mit Druckgas aufweist, die dazu vorgesehen ist, an die verladene Druckgas-Quelle angeschlossen zu werden.

3. Vorrichtung nach irgendeinem der Ansprüche 1 und 2, **dadurch gekennzeichnet, dass** das perforierte Rohr, aus dem der pneumatische Wellenbrecher (10.4) besteht, mindestens in der ausgefahrenen Position durch die Abschnitte (10.2; 10.3) von Armen, die aneinander angelenkt sind, in Funktionsstellung gebracht wird.

4. Vorrichtung nach irgendeinem der Ansprüche 1 bis 3, **dadurch gekennzeichnet, dass** die optimale Regelung des Wellenbrechers (10.4) sowohl bezüglich seiner Eintauchtiefe (10.4.1), seiner Länge (10.4.2), seines Winkels im Verhältnis zur Horizontalen (10.4.3), seines Winkels (10.4.4) im Verhältnis zur Längsachse des Konvois, des Gas-Durchsatzes als auch des Gas-Drucks möglich ist.

5. Vorrichtung nach irgendeinem der Ansprüche 1 bis 4, **dadurch gekennzeichnet, dass** die optimalen Regelungen durch eine Bedienperson von dem Steuerposten (15) aus gesteuert werden können.

6. Vorrichtung nach irgendeinem der Ansprüche 1 bis 5, **dadurch gekennzeichnet, dass** die optimalen Regelungen durch einen Bordcomputer gesteuert werden, der mit einem GPS-System gekoppelt ist, das ständig die Position des Flusskonvois auf dem Wasserweg, seine Geschwindigkeit und seine Richtung misst, und der die optimalen Regelungen in Abhängigkeit von dem Tiefgang, der Geschwindigkeit und der Empfindlichkeit der Kanalufer angibt.

7. Vorrichtung nach irgendeinem der Ansprüche 1 bis 6, **dadurch gekennzeichnet, dass** das Druckgas aus Druckluft besteht.

**Claims**

1. A device on-board a floating structure (1) and designed to dampen the wave action at its source, comprising at least two pneumatic breakwaters, two in front (8 and 10) or two in back (9 and 11) or a total of four between the front and back (8, 9, 10 and 11), those breakwaters being formed by a perforated duct (10.4), supplied with gas by a pressurized gas source, designed to produce, when it is submerged, a curtain of small gas bubbles (12), which dampen the ship-generated waves when the floating depression structure (1.1) moves at a speed (4) between the banks (3) and (14) of a waterway (2), **characterized in that** it includes a support structure receiving the pneumatic breakwater (10) and a mechanism (10.1; 10.2; 10.3) able to move the pneumatic breakwater (10) between a folded position and a deployed position in which said pneumatic breakwater (10) is situated in the water at a distance from the surface, in front of the ship-generated waves by moving the floating structure (1), the deployment being commanded from the control unit (15), independently for each of the breakwaters (8, 9, 10 and 11).

2. The device according to claim 1, **characterized in that** the perforated duct (10.4), making up the breakwater, comprises a compressed gas supply line (10.5) provided to be connected to the on-board compressed gas source.

3. The device according to any one of claims 1 and 2, **characterized in that** at least in the deployed position, the perforated duct making up the pneumatic breakwater (10.4) is put into the operating position by arm segments (10.2; 10.3) articulated to each other.

4. The device according to any one of claims 1 to 3, **characterized in that** the optimum adjustment of the breakwater (10.4) is possible for its submersion depth (10.4.1), length (10.4.2), angle relative to the horizontal (10.4.3), angle (10.4.4) relative to the longitudinal axis of the convoy, and the gas flow rate and pressure.

5. The device according to any one of claims 1 to 4, **characterized in that** the optimal adjustments can be commanded by an operator from the control station (15).

6. The device according to any one of claims 1 to 5, **characterized in that** the optimal adjustments are controlled by an on-board computer coupled to a GPS that continuously measures the position of the river convoy on the waterway, its speed and its heading, and which indicates the optimal adjustments based on the depression, the speed and the sensitivity of the banks.

7. The device according to any one of claims 1 to 6, **characterized in that** the pressurized gas is compressed air.

Fig. 1

7

Fig. 2

**Fig. 3**

**Fig. 4**

9

**Fig. 5**

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008074886 A
- EP 0654780 A
- WO 2010087717 A
- WO 9307046 A
- DE 3924204
- GB 278601 A
- FR 2641751